(19) Europäisches Patentamt
European Patent Office
Office européen des brevets

(11) **EP 4 418 215 B1**

(12) **EUROPEAN PATENT SPECIFICATION**

(45) Date of publication and mention
of the grant of the patent:
**14.01.2026 Bulletin 2026/03**

(21) Application number: **23157035.9**

(22) Date of filing: **16.02.2023**

(51) International Patent Classification (IPC):
**G06V 10/82** (2022.01)

(52) Cooperative Patent Classification (CPC):
**G06V 10/82**

(54) **METHOD FOR TRAINING A DOMAIN-ADAPTED NEURAL NETWORK, AND ASSOCIATED DEVICE**

VERFAHREN ZUM TRAINIEREN EINES DOMÄNENADAPTIERTEN NEURONALEN NETZWERKS UND ZUGEHÖRIGE VORRICHTUNG

PROCÉDÉ D'APPRENTISSAGE D'UN RÉSEAU NEURONAL ADAPTÉ AU DOMAINE ET DISPOSITIF ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**21.08.2024 Bulletin 2024/34**

(73) Proprietors:
• **TOYOTA JIDOSHA KABUSHIKI KAISHA**
**Toyota-shi, Aichi-ken 471-8571 (JP)**
• **ETH Zurich**
**8092 Zürich (CH)**

(72) Inventors:
• **ABBELOOS, Wim**
**1140 Brussels (BE)**
• **SAKARIDIS, Christos**
**8092 Zurich (CH)**
• **YU, Fisher**
**8092 Zurich (CH)**
• **VAN GOOL, Luc**
**8092 Zurich (CH)**

(74) Representative: **Cabinet Beau de Loménie**
**103, rue de Grenelle**
**75340 Paris Cedex 07 (FR)**

(56) References cited:
**CN-A- 115 393 365     US-A1- 2018 373 999**

**Description**

BACKGROUND OF THE INVENTION

1. Field of the Invention

The present disclosure is related to the field of computer vision. More precisely, the present disclosure relates to neural networks that may be able to generate a semantic segmentation of images belonging to different domains.

2. Description of Related Art

Machine learning techniques typically require a huge amount of labeled data associated to a given domain to obtain reliable performances. However, the collection and annotation of a large dataset corresponding to a new domain is extremely expensive, time-consuming and error-prone. Furthermore, in some domains, sufficient training data is not available. Finally, a model trained on a dataset of a domain provides poor results when tested on data of another domain, due to "domain shift".

However, it often happens that a large amount of data is available for another domain that is related to the considered one. Hence, it would be advantageous to adapt a learning model trained on samples of a domain to apply a task on samples of another domain.

Domain adaptation (DA) is a learning task that addresses that issue, by considering the case of a model trained with samples of one or more domains (named "source domains"), and then configured to apply a task on samples of a different but related domain (named "target domain"). The aim of domain adaptation is to address the shift between the source and target domains, which typically degrades the performance of learning models, by providing a model initially trained on samples of a given domain but then adapted to process samples of another domain which is related to the given domain. Domain adaptation is typically considered as a particular type of transfer learning in which the data distribution of source and target domains are different but the label space in the source domain and target domain are the same.

Adapting a model to process samples of a target domain by only considering samples from the source domain leads to poor performances, even when a small domain shift exists. To cope with this, Unsupervised Domain Application (UDA) techniques process labeled samples from the source domain and unlabeled samples from the target one. UDA techniques are especially useful for semantic segmentation, where the learning models require a huge amount of manually labeled data, which is expensive to obtain since a per-pixel labeling is needed. Semantic segmentation is defined as the task of assigning, to each pixel of an input image, a label representing its semantic content. Typically, an initial supervised training on the source domain is adapted to the target one by means of an unsupervised learning strategy aiming at achieving reliable performance also on the target domain for which no labels are available.

These techniques are particularly adapted to bridge the gap between these synthetic data and real world data. As a matter of fact, computer graphics field generates a large amount of annotated synthetic data that may be used for training a model at the end dedicated to process real-world data. UDA techniques then allow bypassing the time-consuming and highly expensive manual labeling required for real-world training data.

However, most feature-level adaptation methods, which are validated on synthetic-to-real adaptations, provide marginal gains in normal-to-adverse condition-level adaptations.

There is thus a room for improvement in the field of semantic segmentation models trained with data representing normal conditions, but intended for processing data representing adverse conditions.

CN 115 393 365 A concerns a method for training a segmentation model of images captured by an UAV. US 2018/373999 A1 discloses a method for training a deep neural network to perform a specified task on images captured by a camera, by utilizing existing labelled training images taken by other cameras.

SUMMARY OF THE INVENTION

The invention is defined in the appended claims. To this end, the present invention first provides a computer-implemented method according to Claim 1.

The method described above therefore proposes a method for training a neural network with labelled images belonging to a given domain (named "source domain") as well as unlabeled images belonging to another domain (and named "target domain"). The source image and the at least one stylized source image are labelled, but the target image and the at least one stylized target image are unlabeled.

Training the neural network is however performed under the condition that the source image and the at least one stylized source image input to the neural network show the same scene under the same viewpoint, and that the at least one target image and the at least one stylized target image show another single scene under the same viewpoint.

In the present description, "viewpoint" corresponds to the viewpoint with respect to the camera used to acquire

the image of a scene.

The source and target images differ in their content and style, i.e., they represent scenes captured with different lighting and/or weather conditions. In an example, the source image belongs to a source domain composed of scene images captured during under normal conditions (e.g., at daytime, when the sky is a clear blue sky, at around 20 000 lux), and the at least one target image belongs to a target domain composed of batches of scene images captured under adverse conditions (e.g., at nighttime when the illuminance is inferior to 1 lux or when the weather is foggy).

In the present description, "normal conditions" are defined as the combination of daytime and clear weather, with no precipitation or snow cover on the ground, i.e. leading to a good visibility. On the contrary, "adverse conditions" include "bad weather" possibly with precipitation and/or snow covering on the ground, and/or an unfavorable luminosity, i.e., leading to a poor visibility.

As further detailed hereafter, the at least one stylized source image is generated by mapping style of the target image onto the source image. In this way, the source image and the at least one stylized source image have similar structural contents, and the at least one stylized source image has the style of an image belonging to the target domain. In other words, in the above method, only style information is leveraged from the target image to generate the at least one stylized source image. The training will then strive to reduce the distance between the features extracted from the source image and the at least one stylized source image, and since both images have a similar structural content, the neural network will be encouraged to generate feature representations which are invariant to the style of these input images.

Similarly, the at least one stylized target image is generated by mapping style of the source image onto the target image. In this way, the target image and the at least one stylized target image have similar structural contents, and the at least one stylized target image has the style of an image belonging to the source domain. In other words, in the above method, only style information is leveraged from the source image to generate the at least one stylized target image. The training will also strive to reduce the distance between the features extracted from the target and those of the at least one stylized target image, and since both images have a similar structural content, the neural network will be encouraged to generate feature representations which are invariant to the style of these input images.

The neural network is trained to generate a semantic segmentation of an input image. The aim of semantic segmentation is to assign to each pixel of the input image a label representing its semantic content. Semantic segmentation differs from image classification in that in image classification, a single label is assigned to the whole scene. That label denotes the pre-dominant object in the scene. Semantic segmentation also differs from object detection in that, in object detection, the objects are identified by means of a bounding box and a label is assigned to each box.

A semantic segmentation of an input image results in an image clustered into regions corresponding to various objects and structures which are labeled with a category representing their semantic content.

The "category" of an object can be referred to as the type or the class of an object, in a manner which is usually done by the person skilled in the art in the field of object detection or semantic segmentation. By way of example, the category can be selected from a list of categories of objects typically present in a scene observed on a street. For example, the categories can be chosen in the list comprising car, pedestrian, cyclist, bus, truck, etc. Categories may also be defined more precisely (for example, for cars, it is possible to consider sedans, compact cars, etc.).

Training the neural network can be performed iteratively. In that case, a plurality of source images and a plurality of target images represent different scenes, each with different structural content. A plurality of stylized source images and stylized target images are then generated, and the training step is iteratively applied.

The neural network is trained by minimizing a loss function penalizing differences between features extracted from images. These differences can be expressed as a distance, and after a plurality of distances are calculated (in the case of batch training), the stochastic gradient descent may be used or any other suitable training algorithm or variant of the stochastic gradient descent. The stochastic gradient descent can be used to adapt the weights of the neural network. The training method according to the invention comprises minimizing a loss function, and, for example, and back-propagating this loss.

In particular implementations, the labelled source image and the at least one unlabeled target image are captured under different lighting and/or weather conditions.

In particular implementations, the stylization method preserves structural content of the source image.

In particular implementations, the stylization method preserves structural content of the target image.

In particular implementations, the neural network comprises an encoder configured for generating intermediate features, and the step of minimizing the loss function encourages the encoder to generate intermediate features invariant to lighting and/or weather conditions.

In particular implementations, labels of the source image are used as ground truth for supervising a semantic segmentation prediction of the source image.

In particular implementations, the neural network further comprises a decoder configured to parse the generated features into "semantic classes" or "categories".

As already mentioned, the notion of "category" can be referred to as the type or the class of an object, in a manner which is usually done by the person skilled in the art in the field of object detection or semantic segmentation.

In particular implementations, the loss function corresponds to a sum of:

- a first feature invariance loss penalizing the differences between features generated from the at least one labelled source image and features generated from the at least one stylized source image, said least one stylized source image comprising the same structural content as the aforementioned labelled source image,
- a second feature invariance loss penalizing the differences between features generated from the at least one target image and features generated from the at least one stylized target image, said at least one stylized target image comprising the same structural content as the aforementioned target image,
- a cross-entropy loss $\mathcal{L}_{CE}$ $(F, I_S, Y_S)$ on an output of the trained neural network for the labelled source image, with $Y_S$ a set of labels of the source image $I_S$, and,
- a cross-entropy loss $\mathcal{L}_{CE}$ $(F, I_T, \hat{Y}_T)$ on an output of the trained neural network for the target image, with $\hat{Y}_t$ a set of pseudo-labels of the target image $I_T$.

In particular implementations, the first and second feature invariance losses are defined as $\mathcal{L}_{\mathrm{inv}}(F, I, I') = \frac{1}{DMN} \|\varphi(I) - \varphi(I')\|_{\mathrm{F}}^2$ with $I$ an image among the source and the target image, $I'$ a stylized version of $I$, $\varphi(I)$ and , $\varphi(I')$ the features generated by the bottleneck layer with $\varphi(I), \varphi(I') \in \mathbb{R}^{D \times M \times N}$ , $\|\cdot\|_{\mathrm{F}}$ the Frobenius norm, D a number of channels, and M and N spatial dimensions of a feature map.

The present invention also concerns a neural network trained by the method according to the invention.

According to a third aspect, the present invention concerns an electronic device comprising at least one processor and a memory having stored thereon a program for implementing the method described above.

According to a fourth aspect, the present invention concerns a computer-implemented method for generating a semantic segmentation of an input image, the method comprising:

- obtaining a neural network trained by performing the method for training a neural network described above; and,

- generating a semantic segmentation of the input image using the obtained neural network.

As already mentioned, generating a semantic segmentation of the input image aims at assigning, to each pixel of the input image, a label representing its semantic content.

According to a fifth aspect, the present invention concerns an electronic device comprising at least one processor and a memory having stored thereon a program for implementing the method for generating a semantic segmentation described above.

According to a sixth aspect, the present invention concerns a system comprising the electronic device configured for implementing the method for training a neural network and the electronic device configured for implementing the method for generating a semantic segmentation of an input image.

Embodiments of the present invention also extend to programs which, when run on a computer or processor, cause the computer or processor to carry out the methods described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

Figure 1 illustrates a particular implementation of an electronic device (10A) configured for implementing the method for training a neural network;

Figure 2 illustrates a particular implementation of an electronic device (10B) configured for generating a semantic segmentation of an input image;

Figure 3 illustrates an example of the hardware architecture of the electronic device (10A) illustrated by Figure 1;

Figure 4 illustrates an example of the hardware architecture of the electronic device (10B) illustrated by Figure 2;

Figure 5 illustrates a functional representation of the electronic device (10A) illustrated by Figure 1;

Figure 6 is a flowchart of a method for training a neural network, according to a particular implementation of the invention;

Figure 7 is a flowchart of a method for generating a semantic segmentation of an input image, according to a particular implementation of the invention; and,

Figure 8 illustrates qualitative results obtained with the electronic device (10A) of Figure 1, for a "normal-to-adverse domain adaptation" scenario, using the Cityscapes dataset and the Adverse Conditions Dataset with Correspondences (ACDC).

## DETAILED DESCRIPTION OF EMBODIMENTS

For the purpose of the invention, it is to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, module, entity, step, function, instruction, and/or the like used herein should be construed as critical or essential unless explicitly described as such. Also, as used herein, the articles "a" and "an" are intended to include one or more items and may be used interchangeably with "one or more" and "at least one". Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

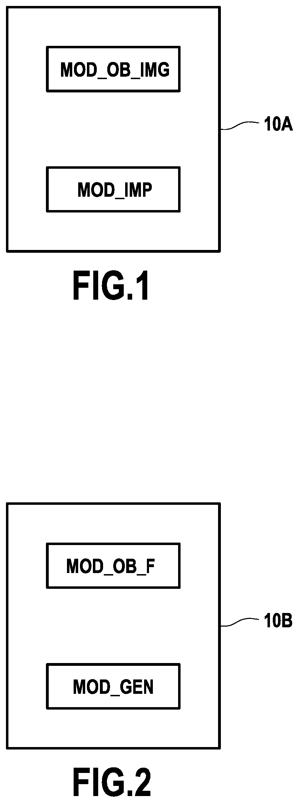

**Figure 1** illustrates a particular implementation of an electronic device 10A configured for implementing the method for training a neural network.

**Figure 2** illustrates a particular implementation of an electronic device 10B configured for generating a semantic segmentation of an input image.

The rest of the description is aimed more specifically at a training of a neural network to provide a semantic segmentation of input images. The invention remains applicable whatever the nature of the neural network considered (convolutional, perceptron, auto-encoder, recurrent, etc.), in particular for any deep neural network.

In addition, no limitation is attached to the kind or content of images (also named "input images") that may be input to the semantic segmentation model, and no limitation is attached to the kind of semantic segmentation that may be output based on the input images (i.e. the nature of the classes or "categories" is not a limiting factor of the invention. Specifically, these images may include, for example, images of urban scenes having pixel-level semantic annotations captured by an autonomous vehicle.

For the records, semantic segmentation is still a challenging and complex task in automatic visual understanding, if compared with simpler problems like image classification or object detection: as a matter of fact, in image classification, a single label is assigned to the whole input image that refers to a pre-dominant object in the scene captured by that input image; in object detection, the objects are identified by means of a 2D bounding box and a label is assigned to each box. On the contrary, in semantic segmentation, each pixel of the input image is assigned to a label corresponding to its semantic content.

The electronic device 10A is configured to train the neural network (F), so as to be able to improve the accuracy of semantic segmentation of images. The trained neural network is then used as an input of an electronic device 10B implementing a method for generating a semantic segmentation of an input image. Said method is referred to as "semantic segmentation method" hereafter. By "improving the accuracy of semantic segmentation", reference is made here to obtaining semantic segmentation results that are more accurate than if the neural network is not improved (or "adapted") according to the invention.

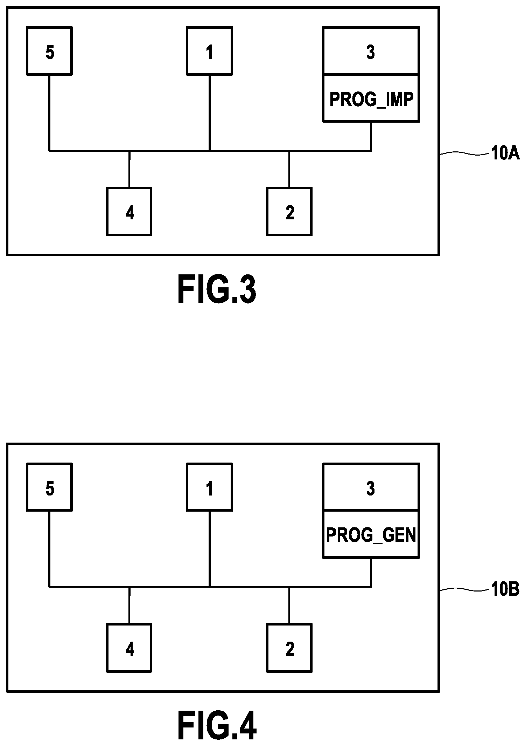

**Figure 3** illustrates an example of the hardware architecture of the electronic device 10A illustrated by Figure 1.

The electronic device 10A has the hardware architecture of a computer. As shown in Figure 3, the electronic device 10A comprises a processor 1. Although illustrated as a single processor 1, two or more processors can be used according to particular needs, desires, or particular implementations of the electronic device 10A. Generally, the processor 1 executes instructions and manipulates data to perform the operations of the electronic device 10A and any algorithms, methods, functions, processes, flows, and procedures as described in the present disclosure.

The electronic device 10A also comprises communication means 5 which are used by the electronic device 10A for communicating with another electronic device that is communicatively linked to that electronic device 10A, for example for connecting a database storing a plurality of labelled source images and a plurality of target images, where each source image of the plurality is associated to at least one target image. Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated electronic device.

Although illustrated as a single communication means 5 in Figure 3, two or more communication means can be used according to particular needs, desires, or particular implementations of the system. The electronic device 10A also comprises a random access memory 2, a read-only memory 3, and a non-volatile memory 4.

The non-volatile memory 4 of the electronic device 10A stores a computer program PROG_IMP conforming to the invention, containing instructions for carrying out the method for training a neural network according to the invention.

The program PROG_IMP defines functional modules of the electronic device 10A, which are based on or control the aforementioned elements 1 to 5 of the electronic device 10A, and which comprise in particular:

- a module MOD_OB_IMG configured for inputting at least one labelled source image ($I_S$) belonging to a source domain; at least one unlabeled target image ($I_T$) belonging to a target domain different from the source domain; at least one stylized source image ($I_{S \to T}$); and at least one stylized target image ($I_{T \to S}$) into the neural network (F); and,

- a module MOD_IMP configured for training a neural network (F) by minimizing a loss function ($\mathcal{L}_{CISS}$) penalizing differences between features ($\varphi(I_S)$) generated from the at least one labelled source image ($I_S$) and features ($\varphi(I_{S \to T})$) generated from the at least one stylized source image ($I_{S \to T}$), and/or the loss function ($\mathcal{L}_{CISS}$) penalizing differences between features ($\varphi(I_T)$) generated from the at least one target image ($I_T$) and features ($\varphi(I_{T \to S})$) generated from the at least one stylized target image ($I_{T \to S}$).

The different functional modules described above can be part of a single electronic device (10A), or can be distributed in a plurality of electronic devices belonging to a system.

<u>Figure 4</u> illustrates an example of the hardware architecture of the electronic device 10B illustrated by Figure 2.

The electronic device 10B has the hardware architecture of a computer. As shown in Figure 4, the electronic device 10B comprises a processor 1. Although illustrated as a single processor 1, two or more processors can be used according to particular needs, desires, or particular implementations of the electronic device 10B. Generally, the processor 1 executes instructions and manipulates data to perform the operations of the electronic device 10B and any algorithms, methods, functions, processes, flows, and procedures as described in the present disclosure.

The electronic device 10B also comprises communication means 5 which are used by the electronic device 10B for communicating with another electronic device that is communicatively linked to that electronic device 10B, for example for connecting the electronic device 10A to receive the neural network once trained according to the method for training a neural network previously mentioned.

Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated system.

Although illustrated as a single communication means 5 in Figure 4, two or more communication means can be used according to particular needs, desires, or particular implementations of the electronic device 10B. The electronic device 10B also comprises a random access memory 2, a read-only memory 3, and a non-volatile memory 4.

The non-volatile memory 4 of the electronic device 10B stores a computer program PROG_GEN conforming to the invention, containing instructions for carrying out the method for generating a semantic segmentation of an input image according to the invention.

The program PROG_GEN defines functional modules of the electronic device 10B, which are based on or control the aforementioned elements 1 to 5 of the electronic device 10A, and which comprise in particular:

- a module MOD_OB_F configured for obtaining a neural network (F) generated by performing the method for training a neural network (F) according to the invention; and,

- a module MOD_GEN configured for generating a semantic segmentation of the input image using the obtained neural network (F).

The different functional modules described above can be part of a single electronic device (10B), or can be distributed in a plurality of electronic devices belonging to a system.

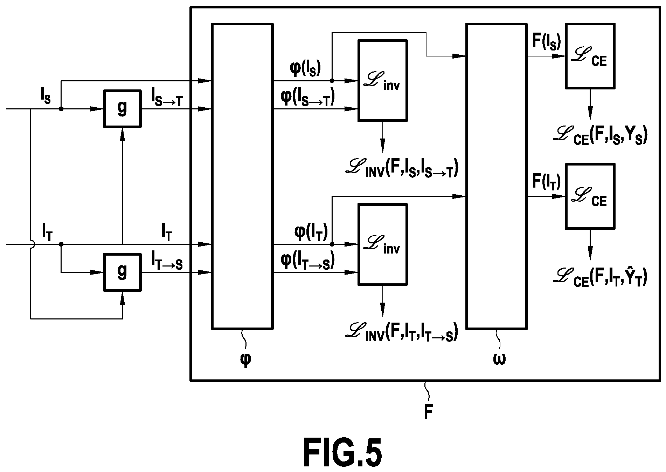

<u>Figure 5</u> illustrates a functional representation of the electronic device 10A illustrated by Figure 1.

As already mentioned, the electronic device 10A implements a method for training a neural network to process images belonging to several related domains. Accordingly, the electronic device 10A learns representations by penalizing differences between encoded features of pairs of images of a same scene, one of the images of the pair being a "stylized version" of the other one.

More precisely, the electronic device 10A is configured to align features that are extracted from the two images with a feature invariance loss that penalizes differences between two feature maps. The intuition is that the encoder of the semantic segmentation network should output features that are invariant to the style of the scene, so that the decoder can subsequently produce identical outputs for different versions of a same scene, as the ground-truth semantics of these versions are also identical.

To that end, as illustrated by Figure 5, a labelled source image $I_S$ belonging to a source domain and a unlabelled target image $I_T$ belonging to a target domain are input to the neural network $F$. The labelled source image $I_S$ and the target image $I_T$ represent different scenes, each being captured under different lighting and/or weather conditions. By "labelled source image", it is referred to an image having pixels associated to a label representing their semantic content. In a particular case, a labelled source image can refer to an image where each pixel of that image is associated to a label.

A "stylization function" $g$ is applied on the source image $I_S$ that also takes into input the target image $I_T$, so as to generate a stylized source image $I_{S \to T}$. That "stylization function" $g$ is also applied on the target image $I_T$, by further taking as input the source image $I_S$, so as to generate a stylized target image $I_{T \to S}$. The stylized source image $I_{S \to T}$ and the stylized target image $I_{T \to S}$ are then also input to the neural network $F$.

As further described below, the stylization function $g$ applied on the source image $I_S$ allows generating a stylized source image $I_{S \to T}$ so that the source image $I_S$ and the stylized source image $I_{S \to T}$ have similar structural contents, and the at least one stylized source image has the style of an image belonging to the target domain. In other words, that stylization method preserves the structural content of the source image $I_S$. In a similar way, the stylization function $g$ applied on the target image $I_T$ allows generating a stylized target image $I_{T \to S}$ so that the target image $I_T$ and the stylized target image $I_{T \to S}$ have similar structural contents, and the stylized target image $I_{T \to S}$ has the style of an image belonging to the source domain.

A representation backbone, also named "encoder" $\varphi$, then generates "feature representations" $\varphi(I_S)$, $\varphi(I_T)$, $\varphi(I_{S \to T})$, and $\varphi(I_{T \to S})$ from the images $I_S$, $I_T$, $I_{S \to T}$, and $I_{T \to S}$. These feature representations are sometimes referred to as "feature maps". The encoder should be a fully convolutional encoder. In that case, a representation $\varphi(.) \in \mathbb{R}^{D*M*N}$ is generated that corresponds to the output of a bottleneck layer, where D corresponds to the channel dimension of the feature map (i.e., the number of channels), and M and N the two spatial dimensions of the feature map (i.e. the numbers of rows and columns of the feature map, respectively).

The neural network is trained so as to be able to improve the accuracy of semantic segmentation of images belonging to another domain by minimizing a feature invariance loss that penalizes differences between the source image $I_S$ and the stylized source image $I_{S \to T}$. To that end, the features $\varphi(I_S)$ and $\varphi(I_{S \to T})$ are fed into a feature invariance loss module $\mathcal{L}_{INV}$, which generates a feature invariance loss named $\mathcal{L}_{INV}(F, I_S, I_{S \to T})$. Since the source image $I_S$ and the stylized source image $I_{S \to T}$ have similar structural contents but only differ in their style, minimizing the function $L_{INV}$ encourages the encoder $\varphi$ to generate feature representations which are independent of the style of an input image. In a practical manner, this may be implemented by minimizing a distance between features $\varphi(I_S)$ and $\varphi(I_{S \to T})$.

The neural network is also trained by minimizing a feature invariance loss $L_{INV}$ that penalizes differences between the target image $I_T$ and the stylized target image $I_{T \to S}$. To that end, the features $\varphi(I_T)$ and $\varphi(I_{T \to S})$ are fed into the feature invariance loss module $\mathcal{L}_{INV}$, which generates a feature invariance loss named $\mathcal{L}_{INV}(F, I_T, I_{T \to S})$. Since the target image $I_T$ and the stylized target image $I_{T \to S}$ have similar structural contents but only differ in their style, minimizing the function $\mathcal{L}_{INV}$ encourages the encoder $\varphi$ to generate feature representations which are independent of the style of an input image. In a practical manner, this may be implemented by minimizing a distance between features $\varphi(I_T)$ and $\varphi(I_{T \to S})$.

The features $\varphi(I_S)$ resulting from a processing (or encoding) of the source image $I_S$ and the features $\varphi(I_T)$ resulting from a processing (or encoding) of the source image $I_T$ are then fed to a shared decoder $\omega$. This decoder $\omega$ is configured to compute softmax predictions and respective cross-entropy losses.

More precisely, the decoder $\omega$ generates a softmax output $F(I_S)$ associated to the source image $I_S$, which is fed into a cross-entropy loss module $L_{CE}$. This cross-entropy loss module $\mathcal{L}_{CE}$ is configured to generate a cross entropy loss $\mathcal{L}_{CE}(F, I_S, Y_S)$, with $Y_S$ the set of labels of the source image $I_S$. In a similar way, the decoder $\omega$ generates a softmax output $F(I_T)$ associated to the target image $I_T$, which is fed into the cross-entropy loss module $\mathcal{L}_{CE}$. This cross-entropy loss module $\mathcal{L}_{CE}$ is configured to generate a cross entropy loss $\mathcal{L}(F, I_T, \hat{Y}_t)$, with $\hat{Y}_t$ a set of pseudo-labels of the target image $I_T$.

Further details concerning the feature invariance loss $L_{INV}(.)$ and the cross entropy loss $L_{CE}(.)$ are provided in the

following.

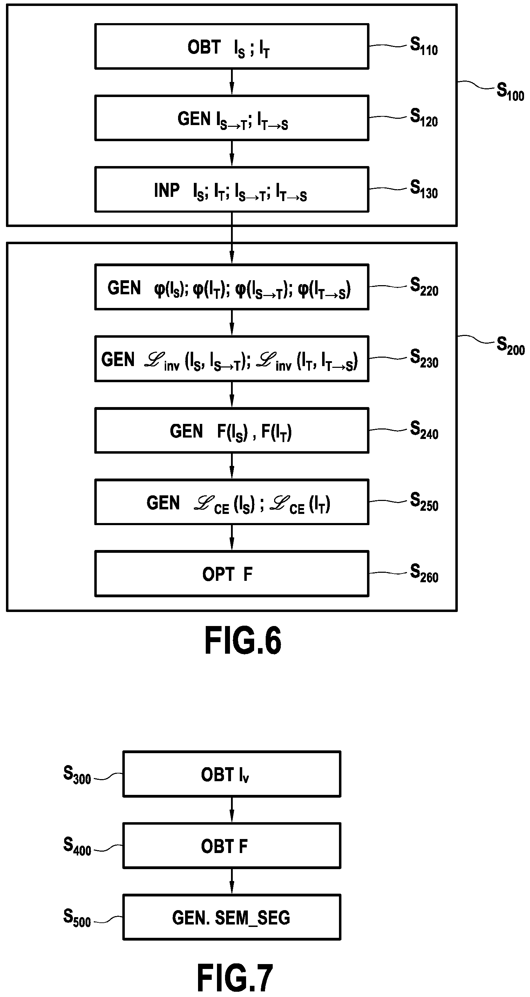

<u>Figure 6</u> is a flowchart of a method for training a neural network, according to a particular implementation of the invention.

The method for training a neural network comprises a step S100 of obtaining at least one labelled source image ($I_S$) belonging to a source domain; obtaining at least one unlabeled target image ($I_T$) belonging to a target domain different from the source domain; obtaining at least one stylized source image ($I_{S \rightarrow T}$); and obtaining at least one stylized target image ($I_{T \rightarrow S}$). This step may be implemented by the module MOD_OB_IMG of the electronic device 10A.

This step S100 comprises the sub-steps S110 of obtaining at least one source image ($I_S$) and at least one unlabeled target image ($I_T$). Typically, a plurality of source images ($I_S$) and target images ($I_T$) are obtained, but for the sake of simplicity, is then considered the case where only one source image ($I_S$) and one target image ($I_T$) are obtained.

Each of the source image ($I_S$) and the target image ($I_T$) may be obtained by accessing a database *D'* storing a dataset comprising a plurality of sets of images, each set comprising one or several source images $I_S$ and one or several target images $I_T$. The source images ($I_S$) and the target images ($I_T$) represent different scenes captured under different lighting and/or weather conditions. The electronic device 10A and the database *D'* may be connected using a wired or wireless connection, via a telecommunication network.

Step S100 further comprises a sub-step S120 of generating a stylized version of the source image ($I_S$) and of the target image ($I_T$).

More precisely, the aim of that sub-step S120 is to generate a stylized version of a given image belonging to a given domain, so that the given image and the stylized image have similar structural contents, and the stylized image has the style of an image belonging to a domain different from the given domain. In that way, the two domains are "aligned" at the level of pixels, and the semantics of the given image is preserved when generating the stylized image. Thus, the semantic annotation of the given image can be used as a ground truth to supervise prediction of the semantic segmentation of the stylized image.

In particular implementations, a light-weight shallow mapping is applied to generate a stylized version of an image. A "light-weight shallow mapping" offers the advantage of performing the stylization (e.g., that step S120) on the fly, and does not introduce unnecessary additional complexity to the overall architecture.

More formally, the stylized source image $I_{S \rightarrow T}$ may be computed as

$$I_{S \rightarrow T} = g(I_S, I_T)$$

and the respective stylized target image as

$$I_{T \rightarrow S} = g(I_T, I_S).$$

The stylization mapping function *g* which is used to generate $I_{S \rightarrow T}$ and $I_{T \rightarrow S}$ is the same.

Although the method of the invention is agnostic to the exact mapping *g* that is used for stylization, in particular implementations, a Fourier Domain Adaptation (FDA) based method is applied. An FDA-based method reduces the discrepancy between the source and target distributions by swapping the low frequency spectrum of one with the other. To generate the stylized source image $I_{S \rightarrow T}$ with the FDA-based method, the electronic devices 10A implements

$$I_{S \rightarrow T} = \mathcal{F}^{-1}\big([M_\beta \circ \mathcal{F}^A(I_T) + (1 - M_\beta) \circ \mathcal{F}^A(I_S); \mathcal{F}^P(I_S)]\big)$$

with $\mathcal{F}^{-1}$ an inverse Fourier Transform, $M_\beta$ a mask, $\mathcal{F}^A(I_T)$ a target image amplitude, $\mathcal{F}^A(I_S)$ a source image amplitude, and $\mathcal{F}^P(I_S)$ a source image phase.

More precisely, the electronic devices 10A implements the following steps:

- applying a Fourier Transform ($\mathcal{F}$) on the source image ($I_S$) to obtain a source image phase $\mathcal{F}^P(I_S)$ and a source image amplitude $\mathcal{F}^A(I_S)$;

- applying a Fourier Transform ($\mathcal{F}$) on the target image ($I_T$) to obtain a target image amplitude $\mathcal{F}^A(I_T)$;

- replacing the low-frequency part of the source image amplitude $\mathcal{F}^A(I_S)$ by the low-frequency part of the target image amplitude $\mathcal{F}^A(I_T)$; and,

- generating the at least one stylized source image ($I_{S \rightarrow T}$) by applying an inverse Fourier Transform $\mathcal{F}^{-1}$ so that

$$I_{S \to T} = \mathcal{F}^{-1}\left(\left[M_\beta \circ \mathcal{F}^A(I_T) + (1 - M_\beta) \circ \mathcal{F}^A(I_S); \mathcal{F}^P(I_S)\right]\right)$$

with $M_\beta$ a mask corresponding to an ideal low-pass filter.

Then, the modified spectral representation of $I_S$ (with its phase component unaltered) is mapped back to the image $I_{S \to T}$, the structural content of which is the same as $I_S$ but that gets the style of an image belonging to the target domain.

The person skilled in the art can consult the article "Fourier Domain Adaptation for Semantic Segmentation" by Yanchao Yang and Stefano Soatto, In IEEE/CVF Conference on Computer Vision and Pattern Recognition, June 2020 for further details concerning the FDA-based method.

A main difference with the FDA-based methods of the art is that in the method for training a neural network of the invention, both images belonging to the source and to the target domain are processed, so as to promote invariance of the features generated by the neural network (F) across the two domains, and thus better align the two domains at the level of features, which improves domain adaptation.

Step S100 further comprises a sub-step S130 of inputting the labelled source image ($I_S$), the target image ($I_T$), the stylized source image ($I_{S \to T}$); and the stylized target image ($I_{T \to S}$) onto the trained neural network (F).

The method for training a neural network further comprises a step S200 of training the neural network (F) by minimizing a loss function ($\mathcal{L}_{CISS}$) penalizing differences between features ($\varphi(I_S)$) generated from the labelled source image ($I_S$) and features ($\varphi(I_{S \to T})$) generated from the at least one stylized source image ($I_{S \to T}$), and/or the loss function ($\mathcal{L}_{CISS}$) penalizing differences between features ($\varphi(I_T)$) generated from the at least one target image ($I_T$) and features ($\varphi(I_{T \to S})$) generated from the at least one stylized target image ($I_{T \to S}$). This step may be implemented by the module MOD_IMP of the electronic device 10A.

More precisely, step S200 comprises sub-steps S220, S230, S240, and S250. As already mentioned, the neural network (F) consists of an encoder and a decoder. At sub-step S220, the neural network (F) generates feature maps, also named "representations" $\varphi(I_S)$, $\varphi(I_T)$, $\varphi(I_{S \to T})$, and $\varphi(I_{T \to S})$ from the images $I_S$, $I_T$, $I_{S \to T}$, and $I_{T \to S}$.

The encoder should be a fully convolutional encoder. In that case, a representation $\varphi(.) \in \mathbb{R}^{D*M*N}$ is generated that corresponds to the output of a bottleneck layer, where D corresponds to the channel dimension of the feature map (i.e., the number of channels), and M and N the two spatial dimensions of the feature map (i.e. the numbers of rows and columns of the feature map, respectively).

At sub-step S230, feature invariance losses $\mathcal{L}_{INV}(F, I_S, I_{S \to T})$ and $\mathcal{L}_{INV}(F, I_T, I_{T \to S})$ are computed.

The use of specific feature invariance losses rather than a typical cross-entropy loss offers the advantage of imposing a stronger constraint on the neural network (F), regarding the shared semantic content between $I_S$ and $I_{s \to t}$, and respectively between $It$ and $I_{t \to s}$.

The feature representations generated at sub-step S220 should ideally be invariant to the specific style or visual condition of the input image, allowing the decoder to focus on parsing these features into output semantic classes and to not have to further abstract from the specific style of the input image.

Thus, the neural network (F) is trained by minimizing a feature invariance loss function $\mathcal{L}_{INV}(.)$ penalizing differences between features generated from a given image and features generated from a stylized version of that given image.

More formally, let us consider F as a composition of an encoder $\varphi$ and a decoder $\omega$, then $F = \omega \circ \varphi$. Let $I$ and $I'$ two input images of the same dimensions, and $\varphi(I)$, $\varphi(I')$ the features generated by the encoder so that $\varphi(I), \varphi(I') \in \mathbb{R}^{D \times M \times N}$, where D corresponds to the channel dimension of the feature map (i.e., the number of channels), and M and N the two spatial dimensions of the feature map (i.e. the numbers of rows and columns of the feature map, respectively).

The feature invariance loss can be expressed as:

$$\mathcal{L}_{\text{inv}}(F, I, I') = \frac{1}{DMN} \|\varphi(I) - \varphi(I')\|_F^2$$

where $\|\cdot\|_F$ is the Frobenius norm.

Going back to step S230, a feature invariance loss function is applied to the pairs of images ($I_S$, $I_{S \to T}$) and ($I_T$, $I_{T \to S}$) in order to align features from each pair, and the feature invariance losses $\mathcal{L}_{INV}(F, I_S, I_{S \to T})$ and $\mathcal{L}_{INV}(F, I_T, I_{T \to S})$ are

computed.

The method for training a neural network (F) then comprises a step S240 of generating a softmax output $F(I_S)$ associated to the source image $I_S$ and a softmax output $F(I_T)$ associated to the target image $I_T$.

At step S250, the softmax output $F(I_S)$ is fed into a cross-entropy loss module $\mathcal{L}_{CE}$ that generates a cross-entropy loss $\mathcal{L}_{CE}(F, I_S, Y_S)$, and the softmax output $F(I_T)$ is also fed into the cross-entropy loss module $\mathcal{L}_{CE}$ that generates a cross entropy loss $\mathcal{L}_{CE}(F, I_T, \hat{Y}_T)$, with $\hat{Y}_t$ a set of pseudo-labels of the target image $I_T$.

In a particular implementation, pseudo-labels of the target image $I_T$ are determined by applying a teacher-student self-training framework of DAFormer [12], with confidence-weighted pseudo-labels.

More formally, if the semantic labels $Y$ are one-hot-encoded in a $C \times H \times W$ tensor, then the cross-entropy loss $\mathcal{L}_{CE}(.)$ associated with the softmax output F(I) of the network for an image $I$ is defined as:

$$\mathcal{L}_{CE}(F, I, Y) = -\frac{1}{CHW} \sum_{c=1..C, h=1..H, w=1..W} Y_{c,h,w} \log\big(F(I)_{c,h,w}\big).$$

The two resulting feature invariance losses $\mathcal{L}_{INV}(F, I_S, I_{S \to T})$ and $\mathcal{L}_{INV}(F, I_T, I_{T \to S})$ are then combined with the cross-entropy losses $\mathcal{L}_{CE}(F, I_S, Y_S)$ and $\mathcal{L}_{CE}(F, I_T, \hat{Y}_T)$, and the resulting loss $\mathcal{L}_{CISS}$ is expressed as:

$$
\begin{aligned}
\mathcal{L}_{CISS} = \quad & \mathcal{L}_{CE}(F, I_s, Y_s) + \mathcal{L}_{CE}\big(F, I_t, \hat{Y}_t\big) \\
& + \lambda_s \mathcal{L}_{inv}(F, I_s, I_{s \to t}) + \lambda_t \mathcal{L}_{inv}(F, I_t, I_{t \to s}),
\end{aligned}
$$

where $\lambda_S$ and $\lambda_t$ are tunable hyperparameters.

At step S260, the neural network (F) is trained by minimizing that resulting loss function $\mathcal{L}_{CISS}$. The stochastic gradient descent may be used or any other suitable training algorithm or variant of the stochastic gradient descent. The stochastic gradient descent can be used to adapt the weights of the neural network. The training method according to the invention comprises minimizing that loss function $\mathcal{L}_{CISS}$, and, for example, back-propagating this loss.

<u>Figure 7</u> is a flowchart of a method for generating a semantic segmentation of an input image, according to a particular implementation of the invention. This method is implemented by the electronic device 10B illustrated by Figure 2.

As shown on Figure 7, the method for generating a semantic segmentation of an input image comprises a first step S300 of obtaining an input image. This input image may belong to the target domain, i.e., this input image may represent a scene captured under adverse conditions.

The method for generating a semantic segmentation of an input image further comprises a step S400 of obtaining a trained neural network (F) generated by performing the method for training a neural network previously described. This step may be implemented by the module MOD_OB_F of the electronic device 10B.

In particular implementations, "obtaining a trained neural network" comprises applying, by this electronic device 10B, the method for training a neural network previously described.

In a variant, the electronic device 10A implements the method for training a neural network, and generates a domain-adapted neural network, e.g., a neural network achieving reliable performance also on images captured under adverse conditions. And the step of "obtaining a trained neural network" then comprises "receiving, by the electronic device 10B, a trained neural network generated by the electronic device 10A". In that case, the electronic device 10A and the electronic device 10B may be connected using a wired or wireless connection, via a telecommunication network.

The method for generating a semantic segmentation of an input image further comprises a step S500 of generating a semantic segmentation of the input image using the neural network (F) obtained at step S400. This step may be implemented by the module MOD_GEN of the electronic device 10B.

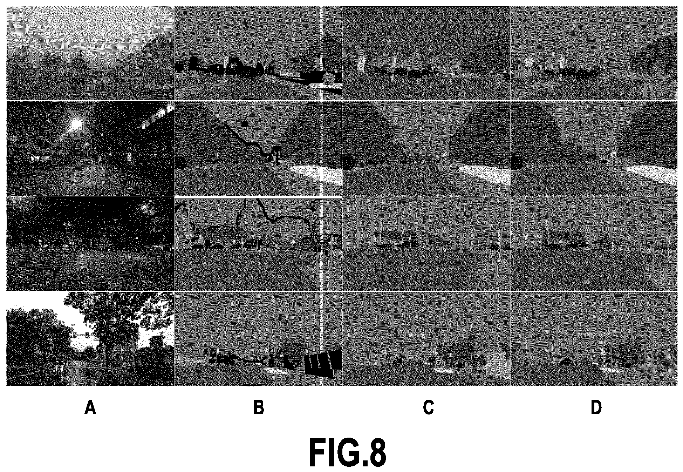

<u>Figure 8</u> illustrates qualitative results obtained with the electronic device (10A) of Figure 1, for a "normal-to-adverse domain adaptation" scenario, using the Cityscapes dataset and the Adverse Conditions Dataset with Correspondences (ACDC).

<u>Implementations details</u>

The default implementation of the method for training a neural network is based on HRDA [13]. The semantic segmentation network comprises an MiT-B5 encoder from SegFormer [42] and a context-aware feature fusion decoder [12].

The method was also implemented with a DeepLabv2 [3] architecture involving a ResNet-101 backbone [9], in order to compare directly to several earlier UDA methods which use this architecture. For the default HRDA-based implementation, the teacher-student self-training framework of DAFormer [12] with confidence-weighted pseudolabels, rare class sampling, and target data augmentation following DACS [34] were followed, and the AdamW optimizer [21] was used with a learning rate of $6 \times 10^{-5}$ for the encoder and $6 \times 10^{-4}$ for the decoder, a linear learning rate warmup, and mini-batches of size $B = 2$, training on two Titan RTX GPUs, each of which processes one of the two samples of each mini-batch.

The default configuration and parameters of HRDA were applied regarding its multi-resolution setup. In the application of the FDA-based method for stylizing an image, $\beta = 0.01$ was used as the bandwidth parameter of the low-frequency band of the Fourier spectrum. We set the default values of the weights of the feature invariance losses in to $\lambda_s = 200$ and $\lambda_t = 100$ for the default HRDA-based implementation of CISS and to $\lambda_s = \lambda_t = 10$ for the alternative DeepLabv2-based implementation.

Datasets

The experiments focus on the setting of domain adaptation and generalization from normal to adverse visual conditions, as the method for training a neural network is tailored for condition-level domain shifts that affect the style and texture of objects in the scene, and not for structural-level shifts as in a typical synthetic-to-real scenario.

The dataset Cityscapes [6] was used as the labelled source-domain set in the experiments. Cityscapes is a large dataset of urban driving scenes, captured in several cities of central Europe under normal conditions and containing high-quality pixel-level semantic annotations for a set of 19 common classes in driving scenes. It consists of a training set with 2975 images, a validation set with 500 images, and a test set with 1525 images. When training UDA methods in our experiments, source images were sampled only from the training set of Cityscapes. In addition, the dataset ACDC [31] was used as the unlabelled target-domain set which models the adverse-condition domain for normal-to-adverse UDA. ACDC consists of 4006 images of driving scenes distributed evenly among four common adverse conditions, i.e., night, fog, rain, and snow. It features high-quality semantic annotations for the same set of 19 classes as Cityscapes. Its training, validation and test set contain 1600, 406 and 2000 images respectively.

Finally, BDD100K [44] was used as a target set for domain generalization. In particular, a zero-shot testing was first performed on the validation set of the 10000-image semantic segmentation subset of BDD100K, which includes 1000 images captured under variable visual conditions. And then BDD100K-night [30], a split of BDD100K with 87 nighttime images with accurate segmentation labels, was used.

Comparison of state-of-the-art unsupervised domain adaptation and generalization methods on Cityscapes $\rightarrow$ ACDC.

Cityscapes serves as the source domain and the entire ACDC including all four adverse conditions serves as the target domain.

The method of the invention, CISS, significantly outperforms all competing methods, both domain adaptation and domain generalization ones, with a margin of 4% in the main mIoU metric from the second-best method. Moreover, the method of the invention achieves the best IoU in 11 out of 19 individual classes, excelling in classes that are crucial for driving perception, such as road, sidewalk, and car. Focusing on the methods that use a DeepLabv2 architecture, CISS-DeepLabv2 also has the top performance among them, showing that the benefit of our method is general across different UDA architectures.

Figure 8 illustrates Qualitative results on Cityscapes $\rightarrow$ ACDC, e.g., qualitative results provided by a neural network trained with the method of the invention, with the Cityscapes dataset as the source domain and the ACDC dataset as the target domain, and then tested/validated on the ACDC dataset.

Column A includes four different images belonging to the ACDC dataset, column B corresponds to their ground-truth annotations, column C corresponds to semantic segmentation results when applying the HRDA method, and column D corresponds to the results when applying the method for training a neural network of the invention.

On the top snowy image, the method of the invention accurately captures sky, road, and sidewalk, whereas HRDA misclassifies both sidewalk and sky as road. On the nighttime image of the second row, the method of the invention successfully segments one of the two very dark pedestrians on the left sidewalk and detects the two motorcycles close to them, while HRDA completely mistakes the pedestrians for vegetation and the motorcycles for cars. On the bottom rainy image, HRDA incorrectly segments the green reflections of two traffic lights on the road as traffic light, while the method of the invention correctly assigns them to road and also segments the right sidewalk much more precisely.

References

[3] Chen & Al., DeepLab: Semantic image segmentation with deep convolutional nets, atrous convolution, and fully connected CRFs. IEEE Transactions on Pattern Analysis and Machine Intelligence, 40(4):834-848, 2018.

[6] Cordts & Al., The Cityscapes dataset for semantic urban scene understanding. In The IEEE Conference on Computer Vision and Pattern Recognition (CVPR), 2016.

[9] He & Al., Deep residual learning for image recognition. In The IEEE Conference on Computer Vision and Pattern Recognition (CVPR), June 2016.

[12] Hoyer & Al., DAFormer: Improving network architectures and training strategies for domain-adaptive semantic segmentation. In Proceedings of the IEEE/CVF Conference on Computer Vision and Pattern Recognition (CVPR), 2022.

[13] Hoyer & Al., HRDA: Context-aware high-resolution domain-adaptive semantic segmentation. In The European Conference on Computer Vision (ECCV), 2022

[21] Loshchilov & Al., Decoupled weight decay regularization. In ICLR, 2018.

[30] Sakaridis & Al., Map-guided curriculum domain adaptation and uncertainty-aware evaluation for semantic nighttime image segmentation. IEEE Transactions on Pattern Analysis and Machine Intelligence, 2020

[34] Tranheden & Al., DACS: Domain adaptation via crossdomain mixed sampling. In Proceedings of the IEEE/CVF Winter Conference on Applications of Computer Vision (WACV), 2021.

[42] Xie & Al., SegFormer: Simple and efficient design for semantic segmentation with transformers. In Advances in Neural Information Processing Systems, 2021.

[44] Yu & Al., BDD100K: A diverse driving dataset for heterogeneous multitask learning. In IEEE/CVF Conference on Computer Vision and Pattern Recognition (CVPR), June 2020.

**Claims**

1. A computer-implemented method for training a neural network (F) to generate a semantic segmentation of an image, the method comprising:

   - inputting (S130) at least one labelled source image ($I_S$) belonging to a source domain; at least one unlabeled target image ($I_T$) belonging to a target domain different from the source domain; at least one stylized source image ($I_{S \to T}$); and at least one stylized target image ($I_{T \to S}$) into the neural network (F),

     wherein the source image and the at least one stylized source image have similar structural contents, wherein the at least one stylized source image has a style of an image belonging to the target domain, wherein the target image and the at least one stylized target image have similar structural contents, wherein the at least one stylized target image has a style of an image belonging to the source domain; and,

   - training (S200) the neural network (F) by minimizing a loss function ($\mathcal{L}_{CISS}$) penalizing differences between features ($\varphi(I_S)$) generated from the labelled source image ($I_S$) and features ($\varphi(I_{S \to T})$) generated from the at least one stylized source image ($I_{S \to T}$), and/or penalizing differences between features ($\varphi(I_T)$) generated from the at least one target image ($I_T$) and features ($\varphi(I_{T \to S})$) generated from the at least one stylized target image ($I_{T \to S}$),

   the method further comprising generating (S120) the at least one stylized source image ($I_{S \to T}$) by applying a stylization method on the source image ($I_S$), and generating (S120) the at least one stylized target image ($I_{T \to S}$) by applying the stylization method on the target image ($I_T$), wherein applying the stylization method on the source image ($I_S$) comprises:

   - applying a Fourier Transform on the source image ($I_S$) to obtain a source image phase $F^P(I_S)$ and a source image amplitude $F^A(I_S)$;

- applying a Fourier Transform on the at least one target image ($I_T$) to obtain a target image amplitude $F^A(I_T)$;
- replacing a low-frequency part of the source image amplitude $F^A(I_S)$ by a low-frequency part of the target image amplitude $F^A(I_T)$; and,
- generating the at least one stylized source image ($I_{S \to T}$) by applying an inverse Fourier Transform $F^{-1}$ so that

$$I_{S \to T} = F^{-1}\big([M_\beta \circ F^A(I_T) + (1 - M_\beta) \circ F^A(I_S); F^P(I_S)]\big)$$

with $M_\beta$ a $_T$mask, and wherein applying the stylization method on the target image ($I_T$) uses the same function ($I_{T \to S}$) with $I_S$ and $I_T$ swapped.

2. The method of Claim 1, wherein the at least one labelled source image ($I_S$) and the at least one unlabeled target image ($I_T$) are captured under different lighting and/or weather conditions.

3. The method of Claim 1 or 2, wherein the stylization method preserves structural content of the source image ($I_S$).

4. The method of one of Claims 1 to 3, wherein the stylization method preserves structural content of the target image ($I_T$).

5. The method of one of Claims 1 to 4, wherein the neural network (F) comprises an encoder ($\varphi$) configured for generating intermediate features, wherein minimizing the loss function ($\mathcal{L}_{CISS}$) encourages the encoder to generate intermediate features ($\varphi(I)$, $\varphi(I')$) invariant to lighting and/or weather conditions.

6. The method of one of Claims 1 to 5, wherein the loss function ($\mathcal{L}_{CISS}$) corresponds to a sum of:

    - a first feature invariance loss penalizing the differences between features ($\varphi(I_S)$) generated from the at least one labelled source image ($I_S$) and features ($\varphi(I_{S \to T})$) generated from the at least one stylized source image ($I_{S \to T}$),
    - a second feature invariance loss penalizing the differences between features ($\varphi(I_T)$) generated from the at least one target image ($I_T$) and features ($\varphi(I_{T \to S})$) generated from the at least one stylized target image ($I_{T \to S}$),

    - a cross-entropy loss $\mathcal{L}_{CE}(F, I_S, Y_S)$ on an output of the trained neural network (F) for the labelled source image ($I_S$), with $Y_S$ a set of labels of the source image $I_S$, and,

    - a cross-entropy loss $\mathcal{L}_{CE}(F, I_T, \hat{Y}_T)$ on an output of the trained neural network (F) for the target image ($I_T$), with $\hat{Y}_t$ a set of pseudo-labels of the target image $I_T$.

7. The method of Claim 6, wherein the first and second feature invariance losses are defined as

$$\mathcal{L}_{inv}(F, I, I') = \frac{1}{DMN} \|\varphi(I) - \varphi(I')\|_F^2$$ with $I$ an image among the source ($I_S$) and the target image ($I_T$), $I'$ a stylized version of $I$, $\varphi(I)$ and $\varphi(I')$ the features generated by the bottleneck layer with $\varphi(I), \varphi(I') \in \mathbb{R}^{D \times M \times N}$, $\|\cdot\|_F$ the Frobenius norm, D a number of channels, and M and N spatial dimensions of a feature map.

8. An electronic device (10A) comprising at least one processor (1) and a memory (3) having stored thereon a program (PROG_IMP) for implementing the method for training a neural network according to one of Claims 1 to 7.

9. A computer program (PROG_IMP) which on execution by an electronic device (10A) causes the electronic device to execute the method for training a neural network according to one of Claims 1 to 7.

10. A recording medium readable by a computer and having recorded thereon a computer program including instructions for executing the method for training a neural network according to one of Claims 1 to 7.

11. A computer-implemented method for generating a semantic segmentation of an input image, the method comprising:

    - obtaining (S400) a neural network (F) trained by performing the method of one of Claims 1 to 7; and,
    - generating (S500) a semantic segmentation of the input image using the obtained neural network (F).

12. An electronic device (10B) comprising at least one processor (1) and a memory (3) having stored thereon a program (PROG_GEN) for implementing the method for generating a semantic segmentation of an input image according to Claim 11.

**13.** A computer program (PROG_GEN) which on execution by an electronic device (10B) causes the electronic device (10B) to execute the method for generating a semantic segmentation of an input image according to Claim 11.

**14.** A recording medium readable by a computer and having recorded thereon a computer program including instructions for executing the method for generating a semantic segmentation of an input image according to Claim 11.

**Patentansprüche**

**1.** Computerimplementiertes Verfahren zum Trainieren eines neuronalen Netzwerks (F) zum Generieren einer semantischen Segmentierung eines Bildes, wobei das Verfahren Folgendes umfasst:

- Eingeben (S130) mindestens eines markierten Quellbildes ($I_S$), das zu einer Quelldomäne gehört; mindestens eines nicht markierten Zielbildes ($I_T$), das zu einer Zieldomäne gehört, die von der Quelldomäne verschieden ist; mindestens eines stilisierten Quellbildes ($I_{S \to T}$); und mindestens eines stilisierten Zielbildes ($I_{T \to S}$) in das neuronale Netzwerk (F),

wobei das Quellbild und das mindestens eine stilisierte Quellbild ähnliche strukturelle Inhalte aufweisen, wobei das mindestens eine stilisierte Quellbild den Stil eines Bildes aufweist, das zu der Zieldomäne gehört, wobei das Zielbild und das mindestens eine stilisierte Zielbild ähnliche strukturelle Inhalte aufweisen, wobei das mindestens eine stilisierte Zielbild einen Stil eines Bildes aufweist, das zu der Quelldomäne gehört; und

- Trainieren (S200) des neuronalen Netzwerks (F) durch Minimieren einer Verlustfunktion ($\mathcal{L}_{CISS}$), die Unterschiede zwischen Merkmalen ($\varphi(I_S)$), die aus dem markierten Quellbild ($I_S$) generiert wurden, und Merkmalen ($\varphi(I_{S \to T})$), die aus dem mindestens einen stilisierten Quellbild ($I_{S \to T}$) generiert wurden, bestraft, und/oder Unterschiede zwischen Merkmalen ($\varphi(I_T)$), die aus dem mindestens einen Zielbild ($I_T$) generiert wurden, und Merkmalen ($\varphi(I_{T \to S})$), die aus dem mindestens einen stilisierten Zielbild ($I_{T \to S}$) generiert wurden, bestraft,

wobei das Verfahren weiter das Generieren (S120) des mindestens einen stilisierten Quellbildes ($I_{S \to T}$) durch Anwenden eines Stilisierungsverfahrens auf das Quellbild ($I_S$) und Generieren (S120) des mindestens einen stilisierten Zielbildes ($I_{T \to S}$) durch Anwenden des Stilisierungsverfahrens auf das Zielbild ($I_T$) umfasst, wobei das Anwenden des Stilisierungsverfahrens auf das Quellbild ($I_S$) Folgendes umfasst:

- Anwenden einer Fourier-Transformation auf das Quellbild ($I_S$), um eine Quellbildphase $F^P(I_S)$ und eine Quellbildamplitude $F^A(I_S)$ zu erhalten,
- Anwendung einer Fourier-Transformation auf das mindestens eine Zielbild ($I_T$), um eine Zielbildamplitude $F^A(I_T)$ zu erhalten;
- Ersetzen eines Niederfrequenzanteils der Quellbildamplitude $F^A(I_S)$ durch einen Niederfrequenzanteil der Zielbildamplitude $F^A(I_T)$; und
- Erzeugen des mindestens einen stilisierten Quellbildes ($I_{S \to T}$) durch Anwenden einer inversen Fourier-Transformation $F^{-1}$, sodass

$$I_{S \to T} = F^{-1}\big([M_\beta \circ F^A(I_T) + (1 - M_\beta) \circ F^A(I_S); F^P(I_S)]\big)$$

wobei $M_\beta$ eine $_T$Maske ist, und wobei das Anwenden des Stilisierungsverfahren auf das Zielbild ($I_T$) dieselbe Funktion ($I_{T \to S}$) mit vertauschtem $I_S$ und $I_T$ verwendet.

**2.** Verfahren nach Anspruch 1, wobei das mindestens eine markierte Quellbild ($I_S$) und das mindestens eine nicht markierte Zielbild ($I_T$) bei unterschiedlichen Licht- und/oder Wetterbedingungen aufgenommen werden.

**3.** Verfahren nach Anspruch 1 oder 2, wobei das Stilisierungsverfahren den strukturellen Inhalt des Quellbildes ($1_S$) beibehält.

**4.** Verfahren nach einem der Ansprüche 1 bis 3, wobei das Stilisierungsverfahren den strukturellen Inhalt des Zielbildes ($I_T$) beibehält.

5. Verfahren nach einem der Ansprüche 1 bis 4, wobei das neuronale Netzwerk (F) einen Codierer ($\varphi$) umfasst, der konfiguriert ist, um Zwischenmerkmale zu generieren, wobei das Minimieren der Verlustfunktion ($\mathcal{L}_{\text{CISS}}$) den Codierer dazu anregt, Zwischenmerkmale ($\varphi(I), (\varphi(I')$) zu generieren, die gegenüber Licht- und/oder Wetterbedingungen unveränderlich sind.

6. Verfahren nach einem der Ansprüche 1 bis 5, wobei die Verlustfunktion ($\mathcal{L}_{\text{CISS}}$) der Summe aus Folgendem entspricht:

   - einem ersten Verlust der Merkmalsinvarianz, der die Unterschiede zwischen Merkmalen ($\varphi(Is)$), die aus dem mindestens einen markierten Quellbild ($I_S$) generiert wurden, und Merkmalen ($\varphi(I_{S \to T})$), die aus dem mindestens einen stilisierten Quellbild ($I_{S \to T}$) generiert wurden, bestraft,
   - einem zweiten Verlust der Merkmalsinvarianz, der die Unterschiede zwischen Merkmalen ($\varphi(I_T)$), die aus dem mindestens einen Zielbild ($I_T$) generiert wurden, und Merkmalen ($\varphi(I_{T \to S})$), die aus dem mindestens einen stilisierten Zielbild ($I_{T \to S}$) generiert wurden, bestraft,

   - einen Kreuzentropieverlust $\mathcal{L}_{\text{CE}}$ (F, $I_S$, $Y_S$) auf einer Ausgabe des trainierten neuronalen Netzwerks (F) für das markierte Quellbild ($I_S$), wobei $Y_S$ ein Satz von Markierungen des Quellbildes $I_S$ ist, und

   - einen Kreuzentropieverlust $\mathcal{L}_{\text{CE}}$ (F, $I_T$, $\hat{Y}_T$) auf einer Ausgabe des trainierten neuronalen Netzwerks (F) für das Zielbild ($I_T$), wobei $\hat{Y}_T$ ein Satz von Pseudomarkierungen des Zielbildes $I_T$ ist.

7. Verfahren nach Anspruch 6, wobei der erste und der zweite Verlust der Merkmalsinvarianz als $$\mathcal{L}_{\text{inv}}(F, I, I') = \frac{1}{DMN} \|\varphi(I) - \varphi(I')\|_{\text{F}}^2$$ definiert sind, wobei $I$ ein Bild aus dem Quellbild ($I_S$) und dem Zielbild ($I_T$), $I'$ eine stilisierte Version von $I$, $\varphi(I)$ und $\varphi(I')$ die Merkmale, die von der Bottleneck-Schicht mit $\varphi(I), \varphi(I') \in \mathbb{R}^{D \times M \times N}$ gebildet wurden, $\|\cdot\|_{\text{F}}$ die Frobenius-Norm, D eine Anzahl von Kanälen und M und N räumliche Dimensionen einer Merkmalskarte sind.

8. Elektronische Vorrichtung (10A), umfassend mindestens einen Prozessor (1) und einen Speicher (3), auf dem ein Programm (PROG_IMP) zum Implementieren des Verfahrens zum Trainieren eines neuronalen Netzwerks nach einem der Ansprüche 1 bis 7 gespeichert ist.

9. Computerprogramm (PROG_IMP), das bei Ausführung durch eine elektronische Vorrichtung (10A) die elektronische Vorrichtung veranlasst, das Verfahren zum Trainieren eines neuronalen Netzwerks nach einem der Ansprüche 1 bis 7 auszuführen.

10. Computerlesbares Speichermedium, auf dem ein Computerprogramm aufgezeichnet ist, darin eingeschlossen Anweisungen zum Ausführen des Verfahrens zum Trainieren eines neuronalen Netzwerks nach einem der Ansprüche 1 bis 7.

11. Computerimplementiertes Verfahren zum Erzeugen einer semantischen Segmentierung eines Eingabebildes, wobei das Verfahren Folgendes umfasst:

   - Erhalten (S400) eines neuronalen Netzwerks (F), das durch die Durchführung des Verfahrens nach einem der Ansprüche 1 bis 7 trainiert wurde; und
   - Erzeugen (S500) einer semantischen Segmentierung des Eingabebildes unter Verwendung des erhaltenen neuronalen Netzwerks (F).

12. Elektronische Vorrichtung (10B), umfassend mindestens einen Prozessor (1) und einen Speicher (3), auf dem ein Programm (PROG_GEN) zum Implementieren des Verfahrens zum Erzeugen einer semantischen Segmentierung eines Eingabebildes nach Anspruch 11 gespeichert ist.

13. Computerprogramm (PROG_GEN), das bei Ausführung durch eine elektronische Vorrichtung (10B) die elektronische Vorrichtung veranlasst, das Verfahren zum Erzeugen einer semantischen Segmentierung eines Eingabebildes nach Anspruch 11 auszuführen.

14. Computerlesbares Aufzeichnungsmedium, auf dem ein Computerprogramm aufgezeichnet ist, darin eingeschlossen Anweisungen zum Ausführen des Verfahrens zum Erzeugen einer semantischen Segmentierung eines Eingabebildes nach Anspruch 11.

**Revendications**

1. Procédé mis en œuvre par ordinateur destiné à entraîner un réseau neuronal (F) pour générer une segmentation sémantique d'une image, le procédé comprenant :

   - l'entrée (S130) de au moins une image de source marquée ($I_S$) appartenant à un domaine de source ; au moins une image de cible non marquée ($I_T$) appartenant à un domaine de cible différent du domaine de source ; au moins une image de source stylisée ($I_{S \to T}$) ; et au moins une image de cible stylisée ($I_{T \to S}$) dans le réseau neuronal (F),

      l'image de source et la au moins une image de source stylisée ayant des contenus structurels similaires, la au moins une image de source stylisée ayant un style d'une image appartenant au domaine de cible,
      l'image de cible et la au moins une image de cible stylisée ayant des contenus structurels similaires, la au moins une image de cible stylisée ayant un style d'une image appartenant au domaine de source ; et,

   - l'entraînement (S200) du réseau neuronal (F) en minimisant une fonction de perte ($\mathcal{L}_{\text{CISS}}$) qui pénalise des différences entre des caractéristiques ($\varphi(I_S)$) générées à partir de l'image de source marquée ($I_S$) et des caractéristiques ($\varphi(I_{S \to T})$) générées à partir de la au moins une image de source stylisée ($I_{S \to T}$), et/ou qui pénalise des différences entre les caractéristiques ($\varphi(I_T)$) générées à partir de la au moins une image de cible ($I_T$) et des caractéristiques ($\varphi(I_{S \to T})$) générées à partir de la au moins une image de cible stylisée ($I_{T \to S}$),

   le procédé comprenant en outre la génération (S120) de la au moins une image de source stylisée ($I_{S \to T}$) en appliquant un procédé de stylisation sur l'image de source ($I_S$), et la génération (S120) de la au moins une image de cible stylisée ($I_{T \to S}$) en appliquant le procédé de stylisation sur l'image de cible ($I_T$), l'application du procédé de stylisation sur l'image de source ($I_S$) comprend :

      - l'application d'une transformée de Fourier sur l'image de source ($I_S$) pour obtenir une phase d'image de source $F^P(I_S)$ et une amplitude d'image de source $F^A(I_S)$ ;
      - l'application d'une transformée de Fourier sur la au moins une image de cible ($I_T$) pour obtenir une amplitude d'image de cible $F^A(I_T)$ ;
      - le remplacement d'une partie à basse fréquence de l'amplitude d'image de source $F^A(I_S)$ par une partie à basse fréquence de l'amplitude d'image de cible $F^A(I_T)$ ; et,
      - la génération de la au moins une image de source stylisée ($I_{S \to T}$) en appliquant une transformée de Fourier inverse $F^{-1}$ de telle sorte que

$$\text{Is} \to \text{T} = F^{-1}([\text{M}\beta \circ F^A(\text{I}_\text{T}) + (1 - \text{M}\beta) \circ F^A(\text{I}_\text{S}); F^P(\text{I}_\text{S})])$$

   avec $M_\beta$ qui est un masque, et l'application du procédé de stylisation sur l'image de cible ($I_T$) qui utilise la même fonction ($I_{T \to S}$) avec $I_S$ et $I_T$ permutés.

2. Procédé selon la revendication 1, selon lequel la au moins une image de source marquée ($I_S$) et la au moins une image de cible non marquée ($I_T$) sont capturées sous différentes conditions d'éclairage et/ou atmosphériques.

3. Procédé selon la revendication 1 ou 2, selon lequel le procédé de stylisation préserve le contenu structurel de l'image de source ($I_S$).

4. Procédé selon l'une quelconque des revendications 1 à 3, selon lequel le procédé de stylisation préserve le contenu structurel de l'image de cible ($I_T$).

5. Procédé selon l'une quelconque des revendications 1 à 4, selon lequel le réseau neuronal (F) comprend un encodeur ($\varphi$) configuré pour générer des caractéristiques intermédiaires, une minimisation de la fonction de perte ($\mathcal{L}_{\text{CISS}}$) encourageant l'encodeur à générer des caractéristiques intermédiaires ($\varphi(I), \varphi(I')$) invariables en fonction des conditions d'éclairage et/ou atmosphériques.

**6.** Procédé selon l'une quelconque des revendications 1 à 5, selon lequel la fonction de perte ($\mathcal{L}_{\text{CISS}}$) correspond à une somme de :

- une première perte d'invariance de caractéristique qui pénalise les différences entre des caractéristiques ($\varphi(I_S)$) générées à partir de la au moins une image de source marquée ($I_S$) et des caractéristiques ($\varphi(I_{S\to T})$) générées à partir de la au moins une image de source stylisée ($I_{S\to T}$),
- une deuxième perte d'invariance de caractéristique qui pénalise les différences entre des caractéristiques ($\varphi(I_T)$) générées à partir de la au moins une image de cible ($I_T$) et des caractéristiques ($\varphi(I_{T\to S})$) générées à partir de la au moins une image de cible stylisée ($I_{T\to S}$),
- une perte d'entropie croisée $\mathcal{L}_{\text{CE}}(F, I_S, Y_S)$ sur une sortie du réseau neuronal entraîné (F) pour l'image de source marquée ($I_S$), avec $Y_S$ qui est un ensemble de marques de l'image de source $I_S$, et,
- une perte d'entropie croisée $\mathcal{L}_{\text{CE}}(F, I_T, \hat{Y}_T)$ sur une sortie du réseau neuronal entraîné (F) pour l'image de cible ($I_T$), avec $\hat{Y}_T$ qui est un ensemble de marques de l'image de cible $I_T$.

**7.** Procédé selon la revendication 6, selon lequel les première et deuxième pertes d'invariance de caractéristique sont définies comme $\mathcal{L}_{\text{INV}}(F, I, I') = \frac{1}{DMN}||\varphi(I) - \varphi(I')||_F^2$ avec $I$ qui est une image parmi la source ($I_S$) et l'image de cible ($I_T$), $I'$ qui est une version stylisée de $I$, $\varphi(I)$ et $\varphi(I')$ qui sont les caractéristiques générées par la couche de goulot d'étranglement avec $\varphi(I), \varphi(I') \in \mathbb{R}^{D\times M\times N}$ $||.||_F$ qui est la norme de Frobenius, D est un nombre de canaux, et M et N sont des dimensions spatiales d'une carte de caractéristique.

**8.** Dispositif électronique (10A) comprenant au moins un processeur (1) et une mémoire (3) ayant stocké dessus un programme (PROG_IMP) pour mettre en œuvre le procédé d'entraînement d'un réseau neuronal selon l'une des revendications 1 à 7.

**9.** Programme informatique (PROG_IMP) qui, lors de l'exécution par un appareil électronique (10A), amène l'appareil électronique à exécuter le procédé d'entraînement d'un réseau neuronal selon l'une des revendications 1 à 7.

**10.** Support d'enregistrement lisible par un ordinateur et ayant enregistré dessus un programme informatique comprenant des instructions pour exécuter le procédé d'entraînement d'un réseau neuronal selon l'une des revendications 1 à 7.

**11.** Procédé mis en œuvre par ordinateur pour générer une segmentation sémantique d'une image d'entrée, le procédé comprenant :

- l'obtention (S400) d'un réseau neuronal (F) entraîné en mettant en œuvre le procédé selon l'une des revendications 1 à 7 ; et,
- la génération (S500) d'une segmentation sémantique de l'image d'entrée utilisant le réseau neuronal obtenu (F).

**12.** Dispositif électronique (10B) comprenant au moins un processeur (1) et une mémoire (3) ayant stocké dessus un programme (PROG_GEN) pour mettre en œuvre le procédé de génération d'une segmentation sémantique d'une image d'entrée selon la revendication 11.

**13.** Programme informatique (PROG_GEN) qui, lors de l'exécution par un dispositif électronique (10B), amène le dispositif électronique (10B) à exécuter le procédé destiné à générer une segmentation sémantique d'une image d'entrée selon la revendication 11.

**14.** Support d'enregistrement lisible par un ordinateur et ayant enregistré dessus un programme informatique comprenant des instructions pour exécuter le procédé de génération d'une segmentation sémantique d'une image d'entrée selon la revendication 11.

**FIG.1**

**FIG.2**

| 5 | | 1 | | 3 |
| | | | | PROG_IMP |

| | 4 | | 2 | |

10A

## FIG.3

| 5 | | 1 | | 3 |
| | | | | PROG_GEN |

| | 4 | | 2 | |

10B

## FIG.4

**FIG.5**

**FIG.6**

**FIG.7**

A          B          C          D

# FIG.8

**REFERENCES CITED IN THE DESCRIPTION**

**Patent documents cited in the description**

- CN 115393365 A

- US 2018373999 A1

**Non-patent literature cited in the description**

- **YANCHAO YANG ; STEFANO SOATTO**. Fourier Domain Adaptation for Semantic Segmentation. *In IEEE/CVF Conference on Computer Vision and Pattern Recognition*, June 2020
- **CHEN**. DeepLab: Semantic image segmentation with deep convolutional nets, atrous convolution, and fully connected CRFs.. *IEEE Transactions on Pattern Analysis and Machine Intelligence*, 2018, vol. 40 (4), 834-848
- **CORDTS**. The Cityscapes dataset for semantic urban scene understanding. *In The IEEE Conference on Computer Vision and Pattern Recognition (CVPR)*, 2016
- **HE**. Deep residual learning for image recognition.. *In The IEEE Conference on Computer Vision and Pattern Recognition (CVPR)*, June 2016
- **HOYER**. DAFormer: Improving network architectures and training strategies for domain-adaptive semantic segmentation.. *In Proceedings of the IEEE/CVF Conference on Computer Vision and Pattern Recognition (CVPR)*, 2022

- **HOYER**. HRDA: Context-aware high-resolution domain-adaptive semantic segmentation.. *In The European Conference on Computer Vision (ECCV)*, 2022
- **LOSHCHILOV**. Decoupled weight decay regularization.. *In ICLR*, 2018
- **SAKARIDIS**. Map-guided curriculum domain adaptation and uncertainty-aware evaluation for semantic nighttime image segmentation. *IEEE Transactions on Pattern Analysis and Machine Intelligence*, 2020
- **TRANHEDEN**. DACS: Domain adaptation via crossdomain mixed sampling.. *In Proceedings of the IEEE/CVF Winter Conference on Applications of Computer Vision (WACV)*, 2021
- **XIE**. SegFormer: Simple and efficient design for semantic segmentation with transformers.. *In Advances in Neural Information Processing Systems*, 2021
- **YU**. BDD100K: A diverse driving dataset for heterogeneous multitask learning.. *In IEEE/CVF Conference on Computer Vision and Pattern Recognition (CVPR)*, June 2020